# EUROPÄISCHE PATENTSCHRIFT

(11) **EP 2 730 174 B1**
(45) Veröffentlichungstag und Bekanntmachung des Hinweises auf die Patenterteilung: **30.05.2018**
(21) Anmeldenummer: 13191800.5
(22) Anmeldetag: 06.11.2013
(51) Int. Cl.: A23G 3/54

(54) **Süßwaren-Figur**
candy figurine
figurine de bonbon

(30) Priorität: 07.11.2012 DE 102012220253
(43) Veröffentlichungstag der Anmeldung: 14.05.2014
(73) Patentinhaber: Mederer GmbH, 90763 Fürth (DE)
(72) Erfinder: Mederer, Herbert, 90768 Fürth (DE)
(74) Vertreter: Rau, Schneck & Hübner Patentanwälte Rechtsanwälte PartGmbB

(56) Entgegenhaltungen:
- WO-A2-2007/133592
- DE-A1- 19 933 597
- DE-C1- 19 849 816
- DE-U1- 29 922 033
- DE-U1-202010 010 446
- LU-A1- 39 232
- US-A- 4 333 974
- US-A- 5 545 069
- US-A- 6 054 158

## Beschreibung

Die Erfindung betrifft eine Süßwaren-Figur und ein Verfahren zur Herstellung derselben.

Süßwaren-Figuren werden im Allgemeinen gerne verzehrt. Oftmals spielen vor allem Kinder auch mit diesen, bevor die Süßwaren-Figuren gegessen werden. Die Handhabung der bekannten Süßwaren-Figuren ist oftmals nicht befriedigend.

Aus der DE 199 33 597 A1 ist ein gattungsgemäßes Fruchtgummierzeugnis in Form einer Figur mit einer ebenen Grundfläche bekannt. Die Grundfläche kann als Standfläche Verwendung finden, wobei die übrige Oberfläche durch entsprechende Ausbildung einer Vollform einem Vorbild wirklichkeitstreu nachgestaltet werden kann.

Die DE 20 2010 010 446 U1 offenbart Volkskunstartikel, die aus essbarem Material bestehen. Ein Schwibbogen hat eine Grundplatte und einen Bogenkörper, die aus Lebkuchen mit Schokoladenüberzug gebildet sind. In den Bogenkörper ist eine halbkreisförmige Oblate eingesetzt.

Aus der US 5,545,069 sind Spielwaren bekannt, die mit essbaren Figuren bestückt sind. Die Figuren sind durch Halteeinrichtungen örtlich festgelegt.

Die DE 299 22 033 U1 offenbart verschiedene Figuren, die beispielsweise Vollmilchschokoladenhohlkörper sind und aufstellbar sind. Alternativ bestehen die Figuren beispielsweise aus Marzipan oder Zucker.

Die DE 198 49 816 C1 offenbart einen Gummibonbon und zur Herstellung desselben eine Gießform, die eine erste Mulde und eine zweite Mulde sowie eine sich an die erste Mulde unten anschließende dritte Mulde umfasst. Es ist zweckdienlich, wenn eine in die dritte Mulde eingebrachte Bonbonmasse schwerer als eine in die eigentliche erste Mulde eingebrachte Bonbonmasse ist. Anschließend wird eine weitere Bonbonmasse in die Form eingebracht, die leichter als die darunter angeordneten Bonbonmassen ist. Verschiedene spezifische Gewichte können beispielsweise dadurch erreicht werden, dass die Bonbonmassen einen unterschiedlichen Schaumgrad haben.

Die WO 2007/133592 A2 offenbart Süßwaren-Anordnungen, die ein unteres Teil und ein oberes Teil umfassen. Das untere Teil ist aus einem Süßwarenmaterial gebildet bzw. von diesem umgeben. Es hat eine Standfläche. Das obere Teil hat einen Kopf und ist auf das untere Teil aufsteckbar.

Aus der US 4,333,974 sind Figuren bekannt, an denen außenseitig Süßwaren befestigt sind. Die Figuren umfassen Fußelemente.

Ein aus der US 6,054,158 bekannter Lutscher hat einen Stielkörper mit einer ebenen Standfläche und einem Kopfbereich, der ursprünglich von Lutschermaterial umgeben und speziell gestaltet ist.

Die LU 39 232 A offenbart ein Verfahren zum Gießen von Süßwaren. Dazu werden mehrteilige Gieß- und Füllformen eingesetzt.

Der Erfindung liegt daher die Aufgabe zugrunde, eine Süßwaren-Figur zu schaffen, die besonders einfach und gut handhabbar ist. Ferner soll die Süßwaren-Figur optisch äußerst ansprechend und wohlschmeckend sein.

Es soll auch ein besonders einfaches und kostengünstiges Verfahren zur Herstellung einer entsprechenden Süßwaren-Figur bereitgestellt werden.

Diese Aufgabe wird erfindungsgemäß durch die in den unabhängigen Ansprüchen 1 bzw. 12 angegebenen Merkmale gelöst. Der Kern der Erfindung liegt darin, dass die Süßwaren-Figur eine Aufstell-Fuß-Anordnung zum standsicheren bzw. kippsicheren Aufstellen der Süßwaren-Figur umfasst. Die Süßwaren-Figur ist so sicher und stabil auf einer Fläche, einem Boden, einem Untergrund oder dergleichen aufstellbar. Hierdurch kann die Süßwaren-Figur besonders gut beim Spielen, für Dekorationen, Präsentationen oder dergleichen eingesetzt werden.

Da die mittlere Aufstell-Fuß-Anordnungs-Dichte größer als die mittlere Süßwaren-Figuren-Körper-Dichte ist, hat die Süßwaren-Figur eine besonders hohe Standsicherheit. Der Schwerpunkt der Süßwaren-Figur liegt verglichen mit herkömmlichen Süßwaren-Figuren vergleichsweise tief. Die mittlere Aufstell-Fuß-Anordnungs-Dichte kann auch als durchschnittliche Aufstell-Fuß-Anordnungs-Dichte bezeichnet werden. Die mittlere Süßwaren-Figuren-Körper-Dichte kann dagegen auch als durchschnittliche Süßwaren-Figuren-Körper-Dichte bezeichnet werden. Die mittlere Aufstell-Fuß-Anordnungs-Dichte ist der Quotient aus der Masse der Aufstell-Fuß-Anordnung und dessen Volumen. Die mittlere Süßwaren-Figuren-Körper-Dichte ist der Quotient aus der Masse des Süßwaren-Figuren-Körpers und dessen Volumen.

Die Aufstell-Fuß-Anordnung ist vorzugsweise bezüglich ihrer Dichte inhomogen. Die Dichte der Aufstell-Fuß-Anordnung ist dann örtlich unterschiedlich. Der Süßwaren-Figuren-Körper ist bevorzugt bezüglich seiner Dichte inhomogen. Die Dichte des Süßwaren-Figuren-Körpers ist dann örtlich unterschiedlich. Die Aufstell-Fuß-Anordnung kann aber auch bezüglich ihrer Dichte homogen sein. Der Süßwaren-Figuren-Körper kann jedoch auch bezüglich seiner Dichte homogen sein.

Nachdem die mindestens eine Süßwaren-Fuß-Masse eine Fruchtgummi-Masse umfasst, hat die Süßwaren-Figur einen äußerst tiefen Schwerpunkt. Die Dichte von Fruchtgummi-Massen ist höher, vorzugsweise wesentlich höher, als von Schaumzucker-Massen. Bevorzugter ist die Dichte der Fruchtgummi-Massen mindestens 1,5 mal höher als der Schaumzucker-Massen. Die Dichte der Schaumzucker-Massen liegt hier zwischen 0,5 g/cm³ und 1,0 g/cm³. Die Dichte der Fruchtgummi-Massen liegt hier zwischen 1,2 g/cm³ und 1,5 g/cm³. Es ist von Vorteil, wenn die zweite Fruchtgummi-Masse in der Aufstell-Fuß-Anordnung mindestens 15 Vol.-%, bevorzugter mindestens 25 Vol.-%, der Aufstell-Fuß-Anordnung ausmacht. Es ist zweckmäßig, wenn die erste Fruchtgummi-Masse und die zweite Fruchtgummi-Masse identisch sind. Beispielsweise ist die Aufstell-Fuß-Anordnung nur aus mindestens einer Fruchtgummi-Masse gebildet und so frei von Schaumzucker-Masse.

Der Süßwaren-Figuren-Körper ist vorzugsweise einem Tier, einem Menschen, einer tierartigen Gestalt, einer menschenartigen Gestalt oder dergleichen nachempfunden. Bevorzugter ist der Süßwaren-Figuren-Körper einer Ente, einem Pinguin, einem Bär oder einem Hasen nachempfunden. Es ist von Vorteil, wenn die Süßwaren-Figur steht.

Unter der Süßwaren-Figuren-Körper-Schwerelinie bzw. -Schwerlinie wird die Wirklinie der resultierenden Gewichtskraft des Süßwaren-Figuren-Körpers verstanden. Auf der Süßwaren-Figuren-Körper-Schwerelinie wirkt die Gewichts- oder Schwerkraft des Süßwaren-Figuren-Körpers.

Es ist von Vorteil, wenn die Aufstell-Fläche im Wesentlichen mehreckig, kreisförmig, teilkreisförmig, oval oder dergleichen ist. Kombinationen sind möglich.

Vorzugsweise ist die Aufstell-Fuß-Anordnung im Bereich der Aufstell-Fläche im Querschnitt größer als der mittlere bzw. durchschnittliche Querschnitt des Süßwaren-Figuren-Körpers.

Es ist zweckmäßig, wenn die Aufstell-Fuß-Anordnung mindestens einen Aufstell-Fuß hat.

Günstigerweise hat die Süßwaren-Figur eine Größe zwischen 1 cm und 14 cm, bevorzugter zwischen 1,5 cm und 7 cm.

Es ist zweckmäßig, wenn die Süßwaren-Figur durch Gießen hergestellt ist/wird.

Weitere vorteilhafte Ausgestaltungen der Erfindung sind in den Unteransprüchen angegeben.

Die Ausgestaltung nach Anspruch 2 führt zu einer äußerst hohen Standsicherheit. Alternativ verläuft die Süßwaren-Figuren-Körper-Schwerelinie schräg zu der Aufstell-Fläche.

Auch die im Wesentlichen planare Aufstell-Fläche führt zu einer hohen Standsicherheit. Alternativ ist die Aufstell-Fläche durch mehrere Aufstell-Vorsprünge gebildet, deren freien Aufstell-Flächen-Bereiche in einer gemeinsamen Aufstell-Ebene liegen.

Die Ausgestaltung nach Anspruch 3 resultiert auch in einer besonders hohen Standsicherheit.

Die im Wesentlichen plattenartige oder blockartige Ausgestaltung der Aufstell-Fuß-Anordnung nach Anspruch 4 führt zu einem einfachen und kostengünstigen Aufbau der Süßwaren-Figur.

Die Ausgestaltung nach Anspruch 5 führt bei unterschiedlichen Farben zu einer optisch äußerst ansprechenden Süßwaren-Figur. Bei Schaumzucker-Massen mit sich unterscheidendem Geschmack ist die Süßwaren-Figur im Allgemeinen besonders wohlschmeckend. Alternativ ist der Süßwaren-Figuren-Körper, abgesehen von dem Schnabel, dem Gesicht, einem Gesichts-Teil und/oder dem Bauch, aus einer einzigen Schaumzucker-Masse gebildet.

Die Ausgestaltung nach Anspruch 6 ist wieder optisch besonders ansprechend.

Die schichtartige bzw. lagenartige Anordnung nach Anspruch 6 führt zu einer besonders hohen Steifigkeit bzw. Stabilität der Süßwaren-Figur, insbesondere des Süßwaren-Figuren-Körpers, da ein Verbundaufbau vorliegt. Die Süßwaren-Figur hat so eine besonders gute Standsicherheit und Formstabilität. Vorzugsweise grenzen die erste und die zweite Schaumzucker-Masse flächig aneinander an. Es ist von Vorteil, wenn die erste und zweite Schaumzucker-Masse miteinander vergossen sind. Alternativ ist mindestens eine weitere Süßwaren-Masse, insbesondere Schaumzucker-Masse, zwischen der ersten und zweiten Schaumzucker-Masse vorgesehen.

Die Ausgestaltung nach Anspruch 7 ist aus ästhetischen Gesichtspunkten besonders ansprechend. Ferner führt diese zu einer äußerst hohen Standsicherheit. Es ist von Vorteil, wenn der Schnabel in seinem Volumen bzw. in seiner Masse wesentlich kleiner als der übrige Teil des Süßwaren-Figuren-Körpers ist. Es ist zweckmäßig, wenn die erste Fruchtgummi-Masse und die erste Schaumzucker-Masse direkt miteinander verbunden, bevorzugter miteinander vergossen, sind. Alternativ hat der Kopf keinen Schnabel.

Gemäß Anspruch 8 umfasst die mindestens eine Süßwaren-Fuß-Masse eine dritte Schaumzucker-Masse. Vorzugsweise grenzen die erste Schaumzucker-Masse und die dritte Schaumzucker-Masse flächig aneinander an. Vorteilhafterweise sind die erste Schaumzucker-Masse und die dritte Schaumzucker-Masse identisch. Es ist von Vorteil, wenn die zweite Fruchtgummi-Masse und die dritte Schaumzucker-Masse direkt miteinander verbunden, bevorzugter miteinander vergossen, sind.

Gemäß Anspruch 9 umfasst die mindestens eine Süßwaren-Fuß-Masse eine vierte Schaumzucker-Masse. Vorzugsweise grenzen die zweite Schaumzucker-Masse und die vierte Schaumzucker-Masse flächig aneinander an. Es ist zweckmäßig, wenn auch die zweite Schaumzucker-Masse und die vierte Schaumzucker-Masse identisch sind. Es ist von Vorteil, wenn die dritte Schaumzucker-Masse und die vierte Schaumzucker-Masse direkt miteinander verbunden, bevorzugter miteinander vergossen, sind.

Die Ausgestaltung nach Anspruch 10 ist aus ästhetischen Gesichtspunkten besonders ansprechend. Ferner führt diese zu einer äußerst hohen Standsicherheit. Es ist von Vorteil, wenn der aus der ersten Fruchtgummi-Masse gebildete Gesichts-Bereich in seinem Volumen bzw. in seiner Masse wesentlich kleiner als der übrige Teil des Süßwaren-Figuren-Körpers ist. Es ist zweckmäßig, wenn die erste Fruchtgummi-Masse und die erste Schaumzucker-Masse direkt miteinander verbunden, bevorzugter miteinander vergossen, sind. In dem Gesichts-Bereich befindet sich das Gesicht. Das Gesicht bildet bekanntlich den vorderen Teil des Kopfes.

Vorzugsweise ist das gesamte Gesicht aus der ersten Fruchtgummi-Masse gebildet. Das Gesicht umfasst Augen, Wangen, Nase/Schnauze und Mund/Maul.

Alternativ ist nur ein Teil des Gesichts aus der ersten Fruchtgummi-Masse gebildet, wie Nase/Schnauze und Mund/Maul sowie optional auch Wangen. Die Augen sind dann in der Schaumzucker-Masse gebildet.

Die Ausgestaltung nach Anspruch 11 ist aus ästhetischen Gesichtspunkten besonders ansprechend. Ferner führt diese zu einer äußerst hohen Standsicherheit. Es ist von Vorteil, wenn der aus der dritten Fruchtgummi-Masse gebildete Bauch-Bereich in seinem Volumen bzw. in seiner Masse wesentlich kleiner als der übrige Teil des Süßwaren-Figuren-Körpers ist.

Es ist zweckmäßig, wenn die dritte Fruchtgummi-Masse und die erste Schaumzucker-Masse direkt miteinander verbunden, bevorzugter miteinander vergossen, sind. In dem Bauch-Bereich befindet sich der Bauch. Alternativ ist der Bauch-Bereich durch die erste Schaumzucker-Masse gebildet. Die dritte Fruchtgummi-Masse und die erste bzw. zweite Fruchtgummi-Masse sind vorzugsweise identisch.

Bei den Ausführungsformen gemäß Anspruch 7, 10 und 11 ist vorne am Süßwaren-Figuren-Körper Fruchtgummi-Masse vorhanden, was zu einer Verschiebung der Süßwaren-Figuren-Körper-Schwerelinie nach vorne führt. Es ist von Vorteil, wenn sich dann die Aufstell-Fuß-Anordnung im Wesentlichen zumindest bis zu dem vordersten Punkt des Süßwaren-Figuren-Körpers, bevorzugter über diesen hinaus, nach vorne erstreckt, um ein Kippen der Süßwaren-Figur zu verhindern. Dies führt insgesamt zu einer erhöhten Standsicherheit.

Schaumzucker-Massen sind essbare Süßigkeiten, die im Allgemeinen aus Zuckerarten, wie Zucker und Glukosesirup, schaumbildenden Stoffen, wie Gelatine und anderen Geliermitteln, pflanzlichen und tierischen Eiweißen sowie oftmals aus Aroma- und Farbstoffen gebildet sind. Schaumzucker-Massen sind auch als Marshmallow-Massen bekannt.

Fruchtgummi-Massen sind essbare, gummiartige Süßigkeiten. Die Hauptbestandteile sind im Allgemeinen Zucker, Glukosesirup, Gelatine, andere Geliermittel, vorzugsweise auch Farbstoffe, Aromastoffe und Säuerungsmittel.

Die auf den Anspruch 1 rückbezogenen Unteransprüche können auch Gegenstand des unabhängigen Anspruchs 12 sein.

Nachfolgend werden unter Bezugnahme auf die beigefügte Zeichnung vier bevorzugte Ausführungsformen der Erfindung beispielhaft beschrieben. Dabei zeigen:
- Fig. 1: eine perspektivische Ansicht einer erfindungsgemäßen Süßwaren-Figur gemäß einer ersten Ausführungsform,
- Fig. 2: einen vereinfachten Längsschnitt durch die in Figur 1 dargestellte Süßwaren-Figur,
- Fig. 3: eine perspektivische Ansicht einer erfindungsgemäßen Süßwaren-Figur gemäß einer zweiten Ausführungsform,
- Fig. 4: einen vereinfachten Längsschnitt durch die in Figur 3 gezeigte Süßwaren-Figur,
- Fig. 5: einen vereinfachten Längsschnitt durch eine erfindungsgemäße Süßwaren-Figur gemäß einer dritten Ausführungsform, und
- Fig. 6: einen vereinfachten Längsschnitt durch eine erfindungsgemäße Süßwaren-Figur gemäß einer vierten Ausführungsform.

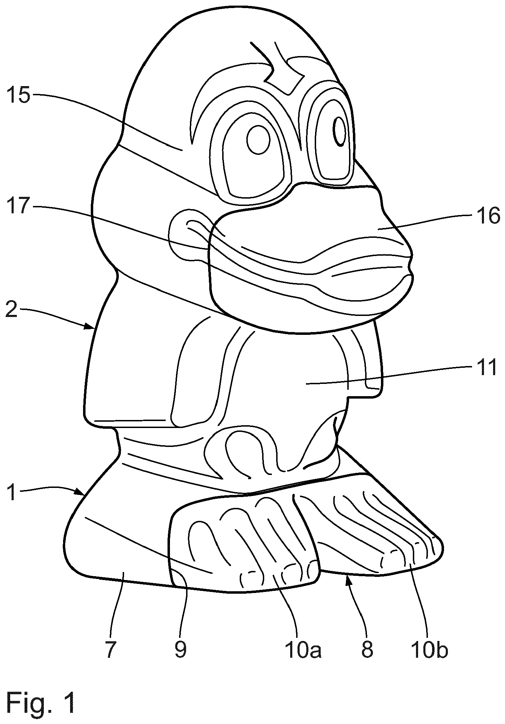

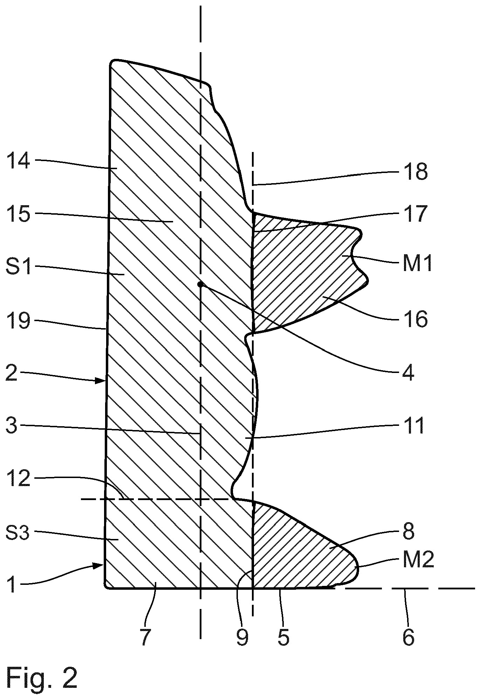

Zunächst wird unter Bezugnahme auf die Figuren 1 und 2 die erste Ausführungsform beschrieben. Eine in diesen Figuren dargestellte Süßwaren-Figur umfasst eine Aufstell-Fuß-Anordnung 1 und einen Süßwaren-Figuren-Körper 2, der auf der Aufstell-Fuß-Anordnung 1 fest angeordnet ist. Die Süßwaren-Figur ist dreidimensional und bezüglich einer LängsMittel-Ebene symmetrisch ausgeführt. Sie ist einer Ente nachempfunden.

Der Süßwaren-Figuren-Körper 2 erstreckt sich im Wesentlichen von der Aufstell-Fuß-Anordnung 1 nach oben und hat eine Süßwaren-Figuren-Körper-Schwerelinie 3. Ferner weist der Süßwaren-Figuren-Körper 2 einen Süßwaren-Figuren-Körper-Schwerpunkt 4 auf.

Die Aufstell-Fuß-Anordnung 1 hat eine untere, freie Aufstell-Fläche 5, die sich im Wesentlichen in einer Aufstell-Ebene 6 erstreckt und ein standsicheres bzw. kippsicheres Aufstellen der Süßwaren-Figur ermöglicht. Die Aufstell-Fuß-Anordnung 1 ist plattenartig ausgeführt. Die Aufstell-Fläche 5 steht im Wesentlichen senkrecht zu der Süßwaren-Figuren-Körper-Schwerelinie 3. Im Bereich der Aufstell-Fläche 5 ist die Aufstell-Fuß-Anordnung 1 im Wesentlichen rechteckförmig ausgeführt. Die Aufstell-Fuß-Anordnung 1 hat daher im Bereich der Aufstell-Fläche 5 eine Außenkontur, die geschlossen ist und im Wesentlichen rechteckig ist. Sie weist zwei Aufstell-Füße 10a, 10b auf, die im Wesentlichen identisch ausgeführt und seitlich nebeneinander angeordnet sind. Die Aufstell-Füße 10a, 10b sind seitlich miteinander verbunden.

Die Aufstell-Fuß-Anordnung 1 ist aus zwei verschiedenen Süßwaren-Fuß-Massen gebildet. Diese Süßwaren-Fuß-Massen unterscheiden sich in ihrer Dichte und Zusammensetzung sowie vorzugsweise auch in ihrer Farbe. In einem Grundabschnitt 7 der Aufstell-Fuß-Anordnung 1 ist eine Schaumzucker-Masse S3 vorgesehen, während ein sich an den Grundabschnitt 7 vorne anschließender Vorderabschnitt 8 der Aufstell-Fuß-Anordnung 1 aus einer Fruchtgummi-Masse M2 gebildet ist. Zwischen dem Grundabschnitt 7 und dem Vorderabschnitt 8 erstreckt sich eine erste Trenn-Fläche bzw. Grenz-Fläche 9, die idealerweise im Wesentlichen senkrecht zu der Aufstell-Fläche 5 verläuft.

An den Grundabschnitt 7 schließt sich oben der Süßwaren-Figuren-Körper 2 mit seinem Rumpfabschnitt 11 an. Zwischen dem Rumpfabschnitt 11 und dem Grundabschnitt 7 liegt eine erste, imaginäre Verbindungs-Fläche 12 vor, die in Figur 2 gestrichelt dargestellt ist. Die erste Verbindungs-Fläche 12 verläuft im Wesentlichen parallel zu der Aufstell-Fläche 5. Die Aufstell-Fuß-Anordnung 1 ist durch die erste Verbindungs-Fläche 12 quasi nach oben begrenzt.

Der Süßwaren-Figuren-Körper 2 weist außerdem einen Kopfabschnitt 14 auf, der sich oben an den Rumpfabschnitt 11 direkt anschließt. Der Kopfabschnitt 14 ist mit dem Rumpfabschnitt 11 fest verbunden.

Der Süßwaren-Figuren-Körper 2 hat in dem Kopfabschnitt 14 einen Kopf 15 mit einem vorderen Schnabel 16 und zwei darüber angeordneten Augen. Der Schnabel 16 ist mit dem übrigen Kopf 15 fest verbunden. Der Schnabel 16 und der übrige Kopf 15 sind durch eine zweite Trenn-Fläche bzw. Grenz-Fläche 17 voneinander getrennt. Die zweite Trenn-Fläche 17 und die erste Trenn-Fläche 9 liegen idealerweise in einer gemeinsamen Trenn-Ebene 18, die im Wesentlichen senkrecht zu der Aufstell-Fläche 5 verläuft. Der Schnabel 16 ist durch eine Fruchtgummi-Masse M1 gebildet, die sich vorzugsweise farblich von der Schaumzucker-Masse S1 unterscheidet. Mit Ausnahme des Schnabels 16 ist der Süßwaren-Figuren-Körper 2 vollständig aus einer Schaumzucker-Masse S1 gebildet.

Die Süßwaren-Figur hat eine Rückseite 19, die vorzugsweise im Wesentlichen planar ist. Es ist von Vorteil, wenn die Rückseite 19 im Wesentlichen senkrecht zu der Aufstell-Fläche 5 verläuft.

Im aufgestellten Zustand steht die Süßwaren-Figur mit ihrer Aufstell-Fläche 5 flächig auf einem Untergrund (nicht dargestellt). Der Süßwaren-Figuren-Körper 2 erstreckt sich dabei von der Aufstell-Fuß-Anordnung 1 längs der Süßwaren-Figuren-Körper-Schwerelinie 3 nach oben.

Die Süßwaren-Figur wird vorzugsweise durch Gießen hergestellt. Dabei wird eine entsprechende Gießform herangezogen. In die Gießform wird zunächst zur im Wesentlichen gleichzeitigen Bildung des Schnabels 16 und des Vorderabschnitts 8 der Aufstell-Fuß-Anordnung 1 Fruchtgummi-Masse M1 bzw. M2 eingebracht bzw. gefüllt, die vorzugsweise identisch sind. Nach zumindest teilweisem Erstarren der Fruchtgummi-Masse M1 bzw. M2 wird anschließend die Schaumzucker-Masse S1 bzw. S3, die vorzugsweise identisch sind, in die Gießform auf die Fruchtgummi-Masse M1 bzw. M2 eingebracht bzw. gefüllt. Nach Erstarren der Süßwaren-Figur ist diese aus der Gießform entfernbar.

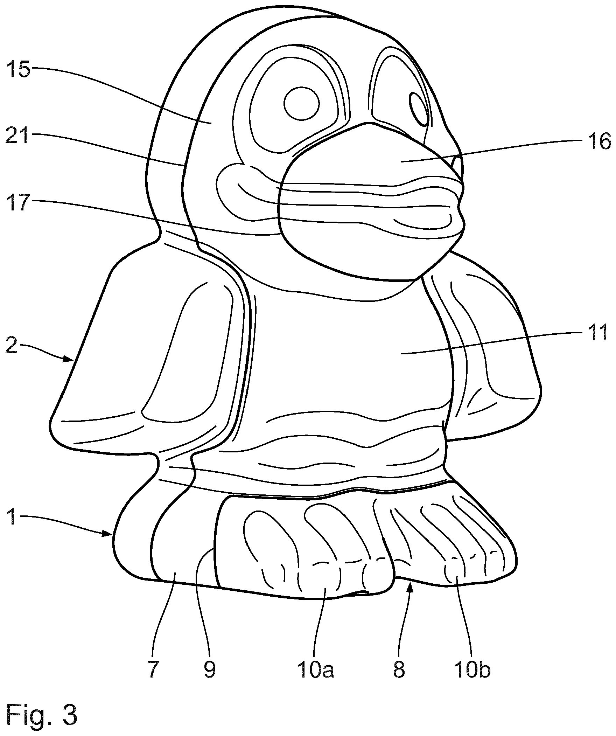

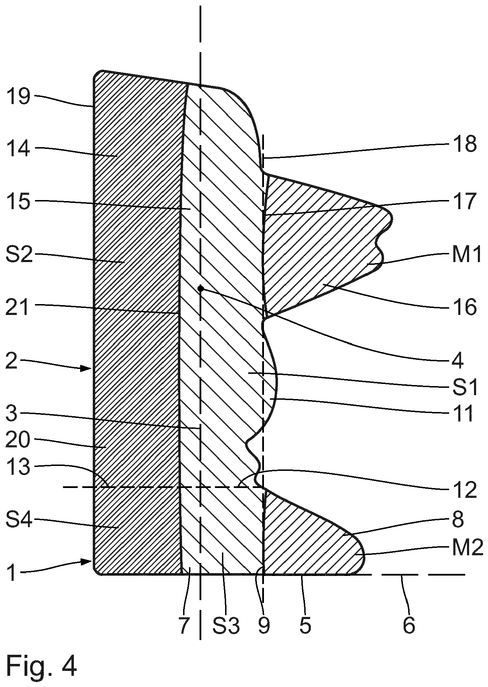

Nachfolgend wird unter Bezugnahme auf die Figuren 3 und 4 eine zweite Ausführungsform beschrieben. Im Gegensatz zu der ersten Ausführungsform, auf deren Beschreibung hiermit verwiesen wird, hat die in den Figuren 3 und 4 dargestellte Süßwaren-Figur einen rückseitigen Abschnitt 20. Der rückseitige Abschnitt 20 ist bei dem Süßwaren-Figuren-Körper 2 durch eine Schaumzucker-Masse S2 und bei der Aufstell-Fuß-Anordnung 1 durch eine Schaumzucker-Masse S4 gebildet. Der rückseitige Abschnitt 20 erstreckt sich also im Wesentlichen über die gesamte Höhe der Süßwaren-Figur und hat eine im Wesentlichen konstante Dicke. Der rückseitige Abschnitt 20 schließt sich an die Schaumzucker-Massen S1 und S3 hinten an und ist mit diesen vergossen. Er bildet rückseitig die Rückseite 19. Zwischen der Schaumzucker-Masse S2 und S4 liegt eine zweite, imaginäre Verbindungs-Fläche 13 vor, die die Aufstell-Fuß-Anordnung 1 quasi nach oben begrenzt und mit der ersten Verbindungs-Fläche 12 im Wesentlichen fluchtet. Die Schaumzucker-Massen S2 und S4 sind vorzugsweise identisch. Sie sind durch eine dritte Trenn-Fläche bzw. Grenz-Fläche 21 von den Schaumzucker-Massen S1 bzw. S3 getrennt. Die dritte Trenn-Fläche 21 verläuft idealerweise senkrecht zu der Aufstell-Fläche 5.

Bei der Herstellung dieser Süßwaren-Figur wird die Schaumzucker-Masse S2 bzw. S4, die vorzugsweise identisch sind, nach Erstarren der Schaumzucker-Masse S1 bzw. S3 auf diese in die Gießform eingebracht bzw. eingegossen. Nach der Erstarrung der Schaumzucker-Masse S2 bzw. S4 ist die Süßwaren-Figur aus der Gießform entnehmbar.

Die Schaumzucker-Masse S1 bildet eine erste Schaumzucker-Masse, während die Schaumzucker-Masse S2 eine zweite Schaumzucker-Masse bildet. Die Schaumzucker-Masse S3 bildet eine dritte Schaumzucker-Masse, während die Schaumzucker-Masse S4 eine vierte Schaumzucker-Masse bildet.

Die Fruchtgummi-Masse M1 bildet eine erste Fruchtgummi-Masse, während die Fruchtgummi-Masse M2 eine zweite Fruchtgummi-Masse bildet.

Bei der ersten Ausführungsform ist so der Süßwaren-Figuren-Körper 2 durch die erste Schaumzucker-Masse S1 und die erste Fruchtgummi-Masse M1 gebildet. Die Aufstell-Fuß-Anordnung 1 ist aus der dritten Schaumzucker-Masse S3 und der zweiten Fruchtgummi-Masse M2 gebildet.

Bei der zweiten Ausführungsform ist der Süßwaren-Figuren-Körper 2 aus der ersten Schaumzucker-Masse S1, der zweiten Schaumzucker-Masse S2 und der ersten Fruchtgummi-Masse M1 gebildet. Die Aufstell-Fuß-Anordnung 1 ist dort durch die zweite Fruchtgummi-Masse M2, die dritte Schaumzucker-Masse S3 und die vierte Schaumzucker-Masse S4 gebildet.

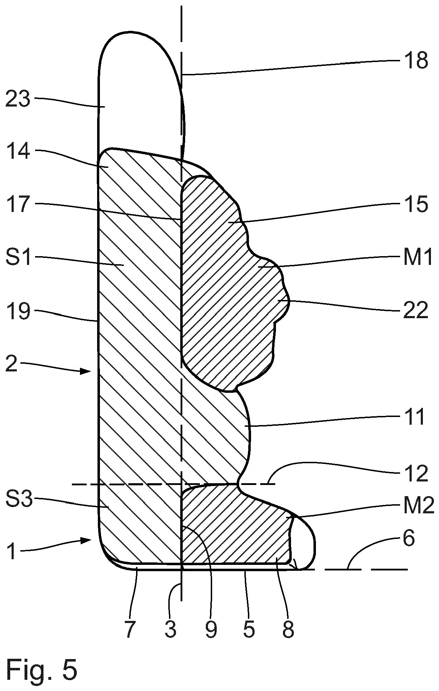

Nachfolgend wird unter Bezugnahme auf die Figur 5 eine dritte Ausführungsform beschrieben. Im Gegensatz zu der ersten Ausführungsform, auf deren Beschreibung hiermit verwiesen wird, ist die Süßwaren-Figur einem Hasen nachempfunden, der steht bzw. aufgerichtet ist.

In dem Grundabschnitt 7 der Aufstell-Fuß-Anordnung 1 ist wieder die Schaumzucker-Masse S3 vorgesehen, während der sich an den Grundabschnitt 7 vorne anschließende Vorderabschnitt 8 der Aufstell-Fuß-Anordnung 1 aus der Fruchtgummi-Masse M2 gebildet ist.

Im Gegensatz zu der ersten Ausführungsform hat diese Süßwaren-Figur ein Gesicht 22, das vorderer Bestandteil des Kopfs 15 ist und vollständig aus der Fruchtgummi-Masse M1 gebildet ist. Das Gesicht 22 und der übrige Kopf 15 sind durch die zweite Trenn-Fläche bzw. Grenz-Fläche 17 voneinander getrennt. Die zweite Trenn-Fläche 17 und die erste Trenn-Fläche 9 liegen idealerweise in einer gemeinsamen Trenn-Ebene 18, die im Wesentlichen senkrecht zu der Aufstell-Fläche 5 verläuft.

Es ist von Vorteil, wenn die Masse bzw. das Volumen des aus der ersten Fruchtgummi-Masse M1 gebildeten Gesichts 22 im Wesentlichen identisch mit der Masse bzw. dem Volumen des aus der zweiten Fruchtgummi-Masse M2 gebildeten Vorderabschnitts 8 der Aufstell-Fuß-Anordnung 1 ist.

Oberhalb des Gesichts 22 sind zwei Ohren 23 vorhanden, die aus der Schaumzucker-Masse S1 gebildet sind.

Die Süßwaren-Figur wird vorzugsweise wieder durch Gießen hergestellt. Dabei wird eine entsprechende Gießform herangezogen. In die Gießform wird zunächst zur im Wesentlichen gleichzeitigen Bildung des Gesichts 22 und des Vorderabschnitts 8 der Aufstell-Fuß-Anordnung 1 Fruchtgummi-Masse M1 bzw. M2 eingebracht bzw. gefüllt, die vorzugsweise identisch sind. Nach zumindest teilweisem Erstarren der Fruchtgummi-Masse M1 bzw. M2 wird anschließend die Schaumzucker-Masse S1 bzw. S3, die vorzugsweise identisch sind, in die Gießform auf die Fruchtgummi-Masse M1 bzw. M2 eingebracht bzw. gefüllt. Nach Erstarren der Süßwaren-Figur ist diese aus der Gießform entfernbar.

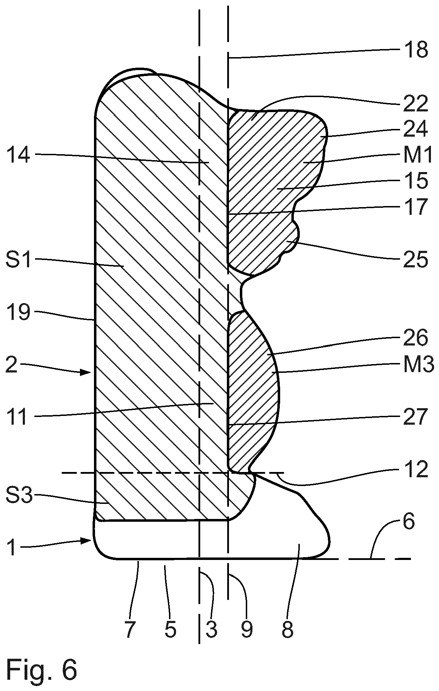

Nachfolgend wird unter Bezugnahme auf die Figur 6 eine vierte Ausführungsform beschrieben. Die Süßwaren-Figur ist einem Bär nachempfunden, der aufgerichtet bzw. stehend ist.

Im Gegensatz zu der ersten Ausführungsform, auf deren Beschreibung hiermit verwiesen wird, ist die Aufstell-Fuß-Anordnung 1 in ihrer Gesamtheit aus der Schaumzucker-Masse S3 gebildet.

Im Gegensatz zu der dritten Ausführungsform ist hier nur ein Teil des Gesichts 22 aus der Fruchtgummi-Masse M1 gebildet. Dieser Teil des Gesichts schließt eine Nase bzw. Schnauze 24 und einen Mund bzw. ein Maul 25 ein. Der übrige Teil des Gesichts 22, wie Augen, ist aus der Schaumzucker-Masse S1 gebildet.

Der Süßwaren-Figuren-Körper 2 hat vorne außerdem einen Bauch 26, der aus einer dritten Fruchtgummi-Masse M3 gebildet ist. Der Bauch 26 befindet sich zwischen der Aufstell-Fuß-Anordnung 1 und dem Kopf 15. Er ist Bestandteil des Rumpfabschnitts 11.

Der aus der Fruchtgummi-Masse M1 gebildete Teil des Gesichts 22 und der übrige Kopf 15 sind wieder durch die zweite Trenn-Fläche bzw. Grenz-Fläche 17 voneinander getrennt. Die zweite Trenn-Fläche 17 und eine zwischen dem Bauch 26 und dem übrigen Rumpfabschnitt 11 verlaufende Trenn-Fläche 27 liegen idealerweise in der gemeinsamen Trenn-Ebene 18, die im Wesentlichen senkrecht zu der Aufstell-Fläche 5 verläuft.

Die Süßwaren-Figur ist vorzugsweise durch Gießen hergestellt. Dabei wird eine entsprechende Gießform herangezogen. In der Gießform wird zunächst zur im Wesentlichen gleichzeitigen Bildung des aus der Fruchtgummi-Masse gebildeten Teils des Gesichts 22 und des Bauchs 26 Fruchtgummi-Masse M1 bzw. M3 eingebracht bzw. gefüllt, die vorzugsweise identisch sind. Nach zumindest teilweisem Erstarren der Fruchtgummi-Masse M1 bzw. M3 wird anschließend die Schaumzucker-Masse S1 bzw.

S3, die vorzugsweise identisch sind, in die Gießform auf die Fruchtgummi-Masse M1 bzw. M3 eingebracht bzw. gefüllt. Nach Erstarren der Süßwaren-Figur ist diese aus der Gießform entfernbar.

Gemäß alternativen Ausführungsformen haben die in den Figuren 5 bzw. 6 dargestellten Süßwaren-Figuren auch den rückseitigen Abschnitt 20, der bei dem Süßwaren-Figuren-Körper 2 durch eine Schaumzucker-Masse S2 und bei der Aufstell-Fuß-Anordnung 1 durch eine Schaumzucker-Masse S4 ähnlich der Figuren 3 und 4 gebildet ist, auf die verwiesen wird.

Kombinationen der Figuren sind möglich. So kann beispielsweise auch der Bauch 26 bei den in den Figuren 1 bis 5 dargestellten Ausführungsformen vorhanden sein.

Gemäß alternativen Ausführungsformen ist/sind das Gesicht, der Kopf, der Bauch, der Rücken, der Oberkörper und/oder die Beine der Süßwaren-Figur zumindest bereichsweise bzw. teilweise, bevorzugter vollständig, aus mindestens einer Fruchtgummi-Masse gebildet. Ansonsten wird auf die Beschreibung der vorherigen Ausführungsformen verwiesen.

## Patentansprüche

1. Süßwaren-Figur mit
a) einem Süßwaren-Figuren-Körper (2), der
i) aus mindestens einer Süßwaren-Figuren-Körper-Masse (M1, S1; S2; M3) gebildet ist,
ii) eine Süßwaren-Figuren-Körper-Schwerelinie (3) hat, und
iii) eine mittlere Süßwaren-Figuren-Körper-Dichte aufweist, und
b) einer mit dem Süßwaren-Figuren-Körper (2) fest verbundenen Aufstell-Fuß-Anordnung (1), wobei die Aufstell-Fuß-Anordnung (1)
i) eine freie Aufstell-Fläche (5) zum Aufstellen der Süßwaren-Figur aufweist,
ii) aus mindestens einer Süßwaren-Fuß-Masse (M2, S3; S4) gebildet ist, wobei die mindestens eine Süßwaren-Fuß-Masse eine Fruchtgummi-Masse (M2) umfasst, und
iii) eine mittlere Aufstell-Fuß-Anordnungs-Dichte aufweist,
**dadurch gekennzeichnet, dass**
c) die mindestens eine Süßwaren-Figuren-Körper-Masse eine erste Schaumzucker-Masse (S1) umfasst, und
d) die mittlere Aufstell-Fuß-Anordnungs-Dichte größer als die mittlere Süßwaren-Figuren-Körper-Dichte ist.

2. Süßwaren-Figur nach Anspruch 1, **dadurch gekennzeichnet, dass** die Aufstell-Fläche (5) senkrecht zu der Süßwaren-Figuren-Körper-Schwerelinie (3) verläuft, wobei vorzugsweise die Aufstell-Fläche (5) planar ist.

3. Süßwaren-Figur nach Anspruch 1 oder 2, **dadurch gekennzeichnet, dass** die Aufstell-Fuß-Anordnung (1) eine geschlossene Außenkontur aufweist, wobei die Süßwaren-Figuren-Körper-Schwerelinie (3) innerhalb der Außenkontur durch die Aufstell-Fuß-Anordnung (1) geht.

4. Süßwaren-Figur nach einem der vorherigen Ansprüche, **dadurch gekennzeichnet, dass** die Aufstell-Fuß-Anordnung (1) plattenartig oder blockartig ausgeführt ist.

5. Süßwaren-Figur nach einem der vorherigen Ansprüche, **dadurch gekennzeichnet, dass** die mindestens eine Süßwaren-Figuren-Körper-Masse eine zweite Schaumzucker-Masse (S2) umfasst, die sich vorzugsweise in ihrer Farbe und/oder ihrem Geschmack von der ersten Schaumzucker-Masse (S1) unterscheidet.

6. Süßwaren-Figur nach Anspruch 5, **dadurch gekennzeichnet, dass** die erste Schaumzucker-Masse (S1) vorderseitig und die zweite Schaumzucker-Masse (S2) rückseitig an dem Süßwaren-Figuren-Körper (2) vorgesehen ist, wobei vorzugsweise die erste und/oder zweite Schaumzucker-Masse (S1, S2) schichtartig angeordnet ist/sind.

7. Süßwaren-Figur nach einem der vorherigen Ansprüche, **dadurch gekennzeichnet, dass** der Süßwaren-Figuren-Körper (2) einen Kopf (15) mit einem vorderseitigen Schnabel (16) aufweist, wobei der Schnabel (16) vorzugsweise aus einer ersten Fruchtgummi-Masse (M1) gebildet ist.

8. Süßwaren-Figur nach einem der vorherigen Ansprüche, **dadurch gekennzeichnet, dass** die mindestens eine Süßwaren-Fuß-Masse eine dritte Schaumzucker-Masse (S3) umfasst.

9. Süßwaren-Figur nach einem der vorherigen Ansprüche, **dadurch gekennzeichnet, dass** die mindestens eine Süßwaren-Fuß-Masse eine vierte Schaumzucker-Masse (S4) umfasst.

10. Süßwaren-Figur nach einem der vorherigen Ansprüche, **dadurch gekennzeichnet, dass** der Süßwaren-Figuren-Körper (2) einen Kopf (15) aufweist, wobei ein vorderer Gesichts-Bereich (22) des Kopfs (15) zumindest teilweise aus einer ersten Fruchtgummi-Masse (M1) gebildet ist.

11. Süßwaren-Figur nach einem der vorherigen Ansprüche, **dadurch gekennzeichnet, dass** der Süßwaren-Figuren-Körper (2) einen vorderen Bauch-Bereich (26) aufweist, wobei der vordere Bauch-Bereich (26) aus einer dritten Fruchtgummi-Masse (M3) gebildet ist.

12. Verfahren zur Herstellung einer Süßwaren-Figur, umfassend die Schritte
- Bilden eines eine Süßwaren-Figuren-Körper-Schwerelinie (3) und eine mittlere Süßwaren-Figuren-Körper-Dichte aufweisenden Süßwaren-Figuren-Körpers (2) aus mindestens einer Süßwaren-Figuren-Körper-Masse (M1, S1; S2; M3), die eine erste Schaumzucker-Masse (S1) umfasst, und
- Bilden einer mit dem Süßwaren-Figuren-Körper (2) fest verbundenen Aufstell-Fuß-Anordnung (1) aus mindestens einer Süßwaren-Fuß-Masse (M2, S3; S4), die eine Fruchtgummi-Masse (M2) umfasst,
-- wobei die Aufstell-Fuß-Anordnung (1) eine freie Aufstell-Fläche (5) zum Aufstellen der Süßwaren-Figur und eine mittlere Aufstell-Fuß-Anordnungs-Dichte aufweist, die größer als die mittlere Süßwaren-Figuren-Körper-Dichte ist.

## Claims

1. Candy figurine comprising
a) a candy figurine body (2) which
i) is formed from at least one candy figurine body mass (M1, S1; S2; M3), and
ii) has a candy figurine body centre line of gravity (3), and
iii) a mean candy figurine body density, and
b) a set-up foot assembly (1) firmly connected to the candy figurine body (2), the set-up foot assembly (1)
i) having a free set-up area (5) for setting up the candy figurine,
ii) is formed from at least one candy foot mass (M2, S3, S4), the at least one candy foot mass comprising a fruit gum mass (M2), and
iii) having a mean set-up foot assembly density,
**characterised in that**
c) the at least one candy figurine body mass comprises a first foamy sugar mass (S1), and
d) the mean set-up foot assembly density is greater than the mean candy figurine body density.

2. Candy figurine according to claim 1, **characterised in that** the set-up surface (5) is perpendicular to the candy figurine body centre line of gravity (3), wherein preferably the set-up surface (5) is planar.

3. Candy figurine according to claim 1 or 2, **characterised in that** the set-foot assembly (1) has a closed outer contour, wherein the candy figurine body centre line of gravity (3) runs through the set-up foot assembly (1) within the outer contour.

4. Candy figurine according to any one of the preceding claims, **characterised in that** the set-up foot assembly (1) is configured in a plate-like or block-like manner.

5. Candy figurine according to any one of the preceding claims, **characterised in that** the at least one candy figurine body mass comprises a second foamy sugar mass (S2), which differs from the first foamy sugar mass (S1) preferably in terms of its colour and/or its taste.

6. Candy figurine according to claim 5, **characterised in that** the first foamy sugar mass (S1) is provided on the front side and the second foamy sugar mass (S2) is provided on the rear side of the candy figurine body (2), wherein preferably the first and/or second foamy sugar mass (S1, S2) is/are arranged in layers.

7. Candy figurine according to any one of the preceding claims, **characterised in that** the candy figurine body (2) has a head (15) with a front beak (16), wherein the beak (16) is preferably formed from a first fruit gum mass (M1).

8. Candy figurine according to any one of the preceding claims, **characterised in that** the at least one candy foot mass comprises a third foamy sugar mass (S3).

9. Candy figurine according to any one of the preceding claims, **characterised in that** the at least one candy foot mass comprises a fourth foamy sugar mass (S4).

10. Candy figurine according to any one of the preceding claims, **characterised in that** the candy figurine body (2) has a head (15), wherein a front face region (22) of the head (15) is formed from a first fruit gum mass (M1) at least partly.

11. Candy figurine according to any one of the preceding claims, **characterised in that** the candy figurine body (2) has a front abdominal region (26), wherein the front abdominal region (26) is formed from a third fruit gum mass (M3).

12. Method of producing a candy figurine, comprising the steps of
- forming a candy figurine body (2) having a candy figurine body centre line of gravity (3) and a mean candy figurine body density from at least one candy figurine body mass (M1, S1; S2; M3), which comprises a first foamy sugar mass (S1), and
- forming a set-up foot assembly (1) firmly connected to the candy figurine body (2) from at least one candy foot mass (M2, S3; S4), which comprises a fruit gum mass (M2),
-- wherein the set-up foot assembly (1) has a free set-up surface (5) for setting up the candy figurine and a mean set-up foot assembly density, which is greater than the mean candy figurine body density.

## Revendications

1. Personnage en confiserie comprenant
a) un corps de personnage en confiserie (2), qui
i) est formé d'au moins une masse de corps de personnage en confiserie (M1, S1 ; S2 ; M3),
ii) présente une médiane de corps de personnage en confiserie (3), et
iii) comporte une épaisseur moyenne de corps de personnage en confiserie, et
b) un ensemble pied de pose (1) relié solidement au corps de personnage en confiserie (2), l'ensemble pied de pose (1)
i) comprenant une surface de pose libre (5) pour la pose du personnage en confiserie,
ii) étant formé d'au moins une masse de pied en confiserie (M2, S3 ; S4), la ou les masses de pied en confiserie comportant une masse de gélatine de fruit (M2), et
iii) présentant une épaisseur moyenne d'ensemble pied de pose,
**caractérisé en ce que**
c) la ou les masses de corps de personnage en confiserie comportent une première masse de guimauve (S1), et
d) l'épaisseur moyenne de l'ensemble pied de pose est supérieure à l'épaisseur moyenne du corps de personnage en confiserie.

2. Personnage en confiserie selon la revendication 1, **caractérisé en ce que** la surface de pose (5) s'étend perpendiculairement à la médiane de corps de personnage en confiserie (3), la surface de pose (5) étant de préférence plane.

3. Personnage en confiserie selon la revendication 1 ou 2, **caractérisé en ce que** l'ensemble pied de pose (1) présente un contour extérieur fermé, la ligne médiane de corps de personnage en confiserie (3) à l'intérieur du contour extérieur traversant l'ensemble pied de pose (1).

4. Personnage en confiserie selon l'une quelconque des revendications précédentes, **caractérisé en ce que** l'ensemble pied de pose (1) est réalisé en forme de plaque ou de bloc.

5. Personnage en confiserie selon l'une quelconque des revendications précédentes, **caractérisé en ce que** la ou les masses de corps de personnage en confiserie comportent une deuxième masse de guimauve (S2) qui se différencie de la première masse de guimauve (S1) de préférence par sa couleur et/ou par son goût.

6. Personnage en confiserie selon la revendication 5, **caractérisé en ce que** la première masse de guimauve (S1) est prévue sur la face avant du corps de personnage en confiserie (2) et la deuxième masse de guimauve (S2) est prévue sur la face arrière du corps de personnage en confiserie (2), la première et/ou la deuxième masse de guimauve (S1, S2) étant de préférence agencées en couches.

7. Personnage en confiserie selon l'une quelconque des revendications précédentes, **caractérisé en ce que** le corps de personnage en confiserie (2) comprend une tête (15) pourvue d'un bec (16) sur la face avant, le bec (16) étant formé de préférence d'une première masse de gélatine de fruit (M1).

8. Personnage en confiserie selon l'une quelconque des revendications précédentes, **caractérisé en ce que** la ou les masses de pied en confiserie comportent une troisième masse de guimauve (S3).

9. Personnage en confiserie selon l'une quelconque des revendications précédentes, **caractérisé en ce que** la ou les masses de pied en confiserie comportent une quatrième masse de guimauve (S4).

10. Personnage en confiserie selon l'une quelconque des revendications précédentes, **caractérisé en ce que** le corps de personnage en confiserie (2) comprend une tête (15), une zone avant de visage (22) de la tête (15) étant formée au moins en partie d'une première masse de gélatine de fruit (M1).

11. Personnage en confiserie selon l'une quelconque des revendications précédentes, **caractérisé en ce que** le corps de personnage en confiserie (2) comprend une zone avant de ventre (26), la zone avant de ventre (26) étant formée d'une troisième masse de gélatine de fruit (M3).

12. Procédé de fabrication d'un personnage en confiserie, comprenant les étapes
- de formation d'un corps de personnage en confiserie (2) présentant une ligne médiane de corps de personnage en confiserie (3) et une épaisseur moyenne de corps de personnage en confiserie, ledit corps étant composé d'au moins une masse de corps de personnage en confiserie (M1, S1 ; S2 ; M3) qui comporte une première masse de guimauve (S1), et
- de formation d'un ensemble pied de pose (1) relié solidement au corps de personnage en confiserie (2) à partir d'au moins une masse de pied de personnage en confiserie (M2, S3 ; S4) qui comporte une masse de gélatine de fruit (M2),
l'ensemble pied de pose (1) présentant une surface de pose libre (5) pour la pose du personnage en confiserie et une épaisseur moyenne d'ensemble pied de pose qui est supérieure à l'épaisseur moyenne de personnage en confiserie.
